# EUROPÄISCHE PATENTSCHRIFT

(11) **EP 2 571 599 B1**
(45) Veröffentlichungstag und Bekanntmachung des Hinweises auf die Patenterteilung: **12.03.2014**
(21) Anmeldenummer: 11719278.1
(22) Anmeldetag: 16.05.2011
(51) Int. Cl.: B01D 53/14, C07D 301/04

(54) **VERFAHREN ZUR ENTFERNUNG VON KOHLENDIOXID (CO2) AUS EINEM KREISGASSYSTEM**
METHOD FOR REMOVING CARBON DIOXIDE (CO2) FROM A RECYCLE GAS SYSTEM
PROCÉDÉ POUR RETIRER LE DIOXYDE DE CARBONE (CO2) D'UN SYSTÈME DE GAZ EN CIRCULATION

(30) Priorität: 18.05.2010 EP 10163045
(43) Veröffentlichungstag der Anmeldung: 27.03.2013
(73) Patentinhaber: BASF SE, 67056 Ludwigshafen (DE)
(72) Erfinder: THIELE, Robin, 67346 Speyer (DE); THEIS, Gerhard, 67133 Maxdorf (DE)
(86) Internationale Anmeldenummer: PCT/EP2011/057815
(87) Internationale Veröffentlichungsnummer: WO 2011/144544

(56) Entgegenhaltungen:
- DE-A1- 2 551 717
- DE-A1- 3 236 600
- DE-A1- 10 036 173
- DE-A1- 19 828 977
- US-A- 3 867 113
- US-A1- 2004 092 774

## Beschreibung

Die Erfindung betrifft ein Verfahren zur Entfernung von Kohlendioxid (CO₂) mittels eines Lösungsmittelgemisches aus einem Kreisgassystem, wobei das CO₂ innerhalb eines Prozesses auftritt, in dem in der Gasphase an einem Katalysator eine chemische Reaktion durchgeführt wird, bei der als Nebenprodukt CO₂ erzeugt wird.

US 3,523,957 A (The Lummus Comp., "Process for Producing an Olefinic Oxide") betrifft allgemein einen Prozess zur Herstellung von Olefinoxiden.

DE 23 44 499 A (The Benfield Corp., "Waschlösung für saure Gase und ihre Verwendung") und US 3,907,969 A (The Benfield Corp., "Separation of CO₂ from Gas Mixtures") beschreibt als Lösungsmittel für die CO₂-Absorption eine Pottaschelösung, die mit anorganischen Salzen aktiviert ist.

Die EP-Patentanmeldung mit dem Aktenzeichen 09159904.0 vom 29.04.09 (BASF SE) betrifft Absorptionsmittel zur Entfernung saurer Gase aus einem Fluidstrom, umfassend eine wässrige Lösung von zyklischen Aminverbindungen.

WO 03/022826 A1 (Scientific Design Com., Inc.; "Heat Recovery Procedure") beschreibt eine Methode zur Wärmerückgewinnung in der CO₂-Ausschleusung bei der Ethylenoxidherstellung. In einer speziellen Waschkolonne wird das Kreisgas erst aufgeheizt, anschließend in den Pottasche-CO₂-Absorber geführt und danach das Gas wieder abgekühlt (Abb. auf Seite 9 der WO-Schrift). Als Wärmeträgermedium wird Wasser verwendet, das in der Nachwäsche aufgeheizt und in der Vorwäsche seine Wärme wieder abgibt. Als Vorteile wird die Reduktion der Gykolbildung im Pottasche-CO₂-Absorber durch Reduktion von Ethylenoxid im zugeführten Kreisgas genannt. Desweiteren führt die Nachwäsche zur Entfernung von Wasser, was für die Reaktionsführung notwendig ist, da Wasser laut der Lehre der Patentanmeldung nachteilig für den Katalysator ist. Als weitere Vorteile wird der geringe Druckverlust im Vergleich zu einer Wärmeintegration über Wärmetauscher genannt.
Nachteile: Der spezielle Apparat, in den beide Wäschen integriert sind, ist sehr aufwendig.

WO 03/082844 A1 (BASF AG, "Verfahren zur Herstellung von Ethylenoxid mit integrierter Kohlendioxidwäsche") lehrt ein Verfahren zur Herstellung von Ethylenoxid aus Ethylen und O₂, bei dem CO₂ mit Hilfe einer wässrigen Aminlösung ausgeschleust wird, die ein tertiäres Alkanolamin und gegebenenfalls ein aliphatisches sekundäres Amin enthält.

Die Patentanmeldung beschreibt für den Betrieb der CO₂-Entfernung bevorzugt ein Lösungsmittel, das im Wesentlichen nur aus dem tertiärem Alkanolamin, insb. N-Methyl-diethanolamin (MDEA) und einem aliphatischen sekundärem Amin, insb. PIP, besteht.
Nach der Lehre der Patentanmeldung kann der den CO₂-Absorber verlassende Gasstrom mit einer wässrigen Lösung einer Mineralsäure oder eines höheren Glykols in Kontakt gebracht werden (Seite 6, 2. Absatz).
Nachteile: Die Glykol- oder Mineralsäurelösungen müssen im Anschluss aufwendig regeneriert werden, um das auskondensierte Wasser zu entfernen. Die Regeneration führt zu einem erhöhten apparativen Aufwand und erhöht die Betriebskosten des Verfahrens. Bei der Aufbereitung der Glykollösung müssen neben dem Wasser außerdem noch gelöste Amine entfernt werden, um eine Aufpegelung zu vermeiden. Die Amine besitzen eine gute Löslichkeit in Glykollösungen. Die für die Gaswäsche gängigen Amine besitzen außerdem eine höhere Siedetemperatur als Wasser, so dass die Glykollösung bei hoher Temperatur oder im Vakuum destilliert werden muss, wodurch der apparative Aufwand und die Betriebskosten stark ansteigen. Da zusätzlich Amine durch Degradation entstanden sein können, die eine höhere Siedetemperatur als die Glykollösung besitzen, muss die Destillation in zwei getrennten Apparaten durchgeführt werden.
Desweiteren wird durch die Glykole ein neuer Stoff in das Verfahren eingebracht, was mit erhöhten Kosten verbunden ist.

WO 01/98285 A1 (Eastman Chem. Comp., "Process for the removal of carbon dioxide from 3,4-epoxy-1-butene process recycle streams") beschreibt im Speziellen für die Herstellung von 3,4-Epoxy-1-Buten (EpB) aus Butadien und O₂ ein Verfahren zur Entfernung von CO₂ mit Hilfe einer wässrigen oder alkoholischen Alkanolaminlösung, wobei es sich bei den Alkanolaminen um primäre und/oder sekundäre Alkanolamine mit jeweils bis zu zehn C-Atomen und mit einer jeweiligen Siedetemperatur von weniger als 250 °C handelt (Seite 15, Zeile 27, bis Seite 16, Zeile 1).
Beschrieben wird, dass Spuren von Aminen (15 Vol.-ppm) den Silber-basierten Katalysator reversibel schädigen können (Seite 19, Zeilen 25-27). Im Besonderen ist der Gehalt an Aminen im Gas hinter der CO₂-Wäsche auf weniger als 10 Vol.-ppm, bevorzugt 5 Vol.-ppm und besonders bevorzugt 1 Vol.-ppm zu reduzieren. Als Möglichkeit zur Entfernung von Aminen wird eine Waschkolonne genannt. Als Waschlösungsmittel wird Wasser bevorzugt (Seite 20).
Ein Unterschied zum Ethylenoxidherstellungsverfahren ist die Tatsache, dass sich bildende Degradationsprodukte in der Aminlösung bei der Herstellung von EpB längerkettig sind, da es sich um Butenole handelt, während bei der Herstellung von Ethylenoxid sich kürzerkettige Ethanole bilden. Es bilden sich also andere Degradationsprodukte und es werden nicht tertiäre Amine im Absorptionsmittel verwendet, somit ist die sich bildende Gasphase auch eine andere. Eine Übertragung der Ergebnisse aus einem EpB-Herstellungsverfahren auf ein EO-Herstellungsverfahren, insbesondere auch bezüglich der Waschwirkung einer Wasserwäsche, ist also nicht möglich.

US 3,867,113 A (Shell Oil Comp.) beschreibt ein mehrstufiges Verfahren zur Abtrennung von CO₂ aus einem Kreisgassystem enthaltend Ethylen und Ethylenoxid.

DE 25 51 717 A1 (BASF AG) betrifft ein Verfahren zur Entfernung von CO₂ und/oder H₂S und/oder COS aus Gasen, die diese Bestandteile enthalten.

DE 100 36 173 A1 (BASF AG) lehrt ein Verfahren zum Entsäuern eines Fluidstroms und Waschflüssigkeit zur Verwendung in einem derartigen Verfahren.

DE 32 36 600 A1 (BASF AG) beschreibt ein Verfahren zum Entfernen von CO₂ und gegebenenfalls H₂S aus Erdgasen, mittels einer wässrigen, ein Alkanolamin enthaltenden Absorptionsflüssigkeit.

Der vorliegenden Erfindung lag die Aufgabe zugrunde, unter Überwindung von Nachteilen des Stands der Technik, ein verbessertes wirtschaftliches Verfahren zur Entfernung von CO₂ zur Verfügung zu stellen, für einen Prozess mit Kreisgassystem, in dem in der Gasphase aus Ethylen an einem Katalysator EO hergestellt wird, bei dem als Nebenprodukt CO₂ erzeugt wird.
Das Verfahren sollte zudem besonders einfach und wirtschaftlich sein.

Erfindungsgemäß wurde erkannt, dass es bei der CO₂-Entfernung mit Aminlösungen in der Ethylenoxidherstellung, bezüglich einer vorteilhaften Absenkung von im Kreisgas verbleibenden Aminspuren auf eine Konzentration, die insbesondere nicht schädlich für die Aktivität des EO-Katalysators ist, besonders auf die Zusammensetzung des Mittels zur weiteren Reinigung des nach dem CO₂-Absorptionsschritt erhaltenen Kreisgases ankommt.

Demgemäß wurde ein Verfahren zur Entfernung von Kohlendioxid (CO₂) mittels eines Absorptionsmittels aus einem Kreisgassystem, wobei das CO₂ innerhalb eines Prozesses auftritt, in dem in der Gasphase an einem Katalysator eine Oxidation von Ethylen mit Sauerstoff (O₂) zu Ethylenoxid (EO) durchgeführt wird, bei der als Nebenprodukt CO₂ erzeugt wird, gefunden, welches dadurch gekennzeichnet ist, dass als Absorptionsmittel eine wässrige Lösung eines oder mehrerer Amine verwendet wird, wobei man zur weiteren Reinigung des nach dem CO₂-Absorptionsschritt erhaltenen Kreisgasstroms diesen in innigen Kontakt mit Wasser bringt, welchem keine Mineralsäure und kein höheres Glykol zugefügt wurde, und das zur weiteren Reinigung des nach dem CO₂-Absorptionsschritt erhaltenen Kreisgasstroms verwendete Wasser wieder für denselben Reinigungsschritt zurückgeführt wird (Kreisfahrweise), wobei ein Teil des Wasser ausgeschleust und durch frisches Wasser ersetzt wird.

Beispiele für eine Mineralsäure wären Schwefelsäure oder Phosphorsäure und auch Verbindungen, die im Wasser eine Mineralsäure freisetzen.
Beispiele für ein höheres Glykol wären solche, die sich von EO ableiten und 2 bis 6 EO-Wiederholungseinheiten aufweisen, besonders Di- oder Triethylenglykol (vgl. WO 03/082844 A1, Seite 6, 3. Absatz) und auch Verbindungen, die im Wasser ein höheres Glykol freisetzen.

Bevorzugt bringt man zur weiteren Reinigung des nach dem CO₂-Absorptionsschritt erhaltenen Kreisgasstroms diesen in innigen Kontakt mit Wasser, welchem keine Säure und kein Glykol (z. B. Monoethylenglykol (EG), Di- oder Triethylenglykol) zugefügt wurde. 'Säure' und ,Glykol' umfasst auch Verbindungen, die im Wasser eine Säure bzw. ein Glykol freisetzen.

Bevorzugt wird das innige In-Kontakt-bringen mit Wasser in einer Waschkolonne durchgeführt. Die Kolonne ist insbesondere als Packungskolonne ausgestaltet.

Bevorzugt weist das zur weiteren Reinigung des nach dem CO₂-Absorptionsschritt erhaltenen Kreisgasstroms eingesetzte Wasser eine Reinheit von ≥ 98 Gew.-%, besonders ≥ 99 Gew.-%.

Vorteilhaft ist, dass durch die Verwendung von Wasser kein neuer Stoff (wie z. B. Glykole, besonders höhere Glykole, oder eine Säure, besonders eine Mineralsäure) in das Verfahren eingebracht wird. Solche neuen Stoffe könnten z. B. den EO-Katalysator schädigen.

Die Temperatur des zur weiteren Reinigung des nach dem CO₂-Absorptionsschritt erhaltenen Kreisgasstroms verwendeten Wassers, besonders am Eintritt der Waschkolonne, liegt bevorzugt im Bereich von 20 bis 50 °C, besonders im Bereich von 25 bis 40 °C. weiter besonders im Bereich von 28 bis 35 °C.

Bevorzugt wird das zur weiteren Reinigung des nach dem CO₂-Absorptionsschritt erhaltenen Kreisgasstroms verwendete Wasser wieder für denselben Reinigungsschritt zurückgeführt (Kreisfahrweise), wobei ein Teil des Wasser sausgeschleust und durch frisches Wasser ersetzt (Make-up-Strom) wird, um eine Aufpegelung an Aminen zu vermeiden (vgl. unten).
Auf eine Aufarbeitung des in diesem Reinigungsschritt anfallenden Wassers wird bevorzugt verzichtet.

In einer bevorzugten Fahrweise wird das ausgeschleuste Wasser einer Abwasserbe-handlung zugeführt oder, besonders vorteilhaft, zur Herstellung von CO₂-Absorptions-mittel im vorhergehenden Verfahrensschritt zur CO₂-Entfernung eingesetzt.

In einer besonders bevorzugten Fahrweise wird der Teil des ausgeschleusten Wassers so bemessen, dass die Konzentration an Aminen, besonders an leichter flüchtigen A-minen, insbesondere an N-Methyl-diethanotamin, Piperazin und Triethylendiamin, im zurückgeführten Wasser im Bereich von 10 bis 10000 Gew.-ppm, insbesondere 200 bis 2000 Gew.-ppm und besonders bevorzugt 400 bis 1500 Gew.-ppm, liegt.

Es bietet sich auch an, den ausgeschleusten Teil des Wassers auf die behandelte Gasmenge zu beziehen, da durch diesen Gasstrom die Amine in die Wasserwäsche eingetragen werden. Die ausgeschleuste Wassermenge sollte dabei bevorzugt 0,1 % bis 10 % der behandelten Gasmenge entsprechen, weiter bevorzugt 0,5 % bis 5 %, besonders bevorzugt 0,8 % bis 3 %, (alles auf Masse bezogen). Um die Wasserbilanz zu halten, muss Wasser dem Kreislauf wieder zugeführt werden. Dies geschieht zum Einen durch das auskondensierte Wasser, da der vorgeschaltete CO₂-Absorber wärmer als die Wasserwäsche gefahren wird, und zum Anderen durch Hinzufügen von frischem Wasser.

Besonders bevorzugt wird im erfindungsgemäßen Verfahren zur Reinigung des Kreisgases nicht ein erster Kontaktschritt "first contact step" in Verbindung mit einem zweiten Kontaktschritt "second contact step" wie in WO 03/022826 A1 (s.o.) beschrieben, wobei insbesondere die wässrige Flüssigkeit vom zweiten Kontaktschritt zum ersten Kontaktschritt geleitet wird, durchgeführt.

Im erfindungsgemäßen Verfahren wird als Absorptionsmittel bevorzugt eine wässrige Lösung enthaltend 10 bis 50 Gew.-%, bevorzugt 15 bis 25 Gew.-%, N-Methyldiethanolamin [H₃C-N(CH₂CH₂OH)₂; MDEA] und 1 bis 20 Gew.-%, bevorzugt 3 bis 8 Gew.-%, Piperazin (PIP) verwendet.

In einer weiteren bevorzugten Ausführungsform wird im erfindungsgemäßen Verfahren als Absorptionsmittel eine wässrige Lösung enthaltend 5 bis 40 Gew.-%, bevorzugt 10 bis 35 Gew.-%, Triethylendiamin (1,4-Ethyienpiperazin; TEDA) und 1 bis 15 Gew.-%, bevorzugt 3 bis 8 Gew.-%, Piperazin (PIP) verwendet.

Bevorzugt wird der CO₂-Absorptionsschritt in einer CO₂-Absorber-Kolonne durchgeführt. Beispiele für bevorzugte Absorber-Kolonnen sind Packungs-, Füllkörper- und Bodenkolonnen.

In einer erfindungsgemäßen Ausführungsform wird die Waschkolonne direkt hinter der CO₂-Absorber-Kolonne als getrennte Kolonne geschaltet, die bei bereits bestehenden Anlagen auch nachgerüstet werden kann.

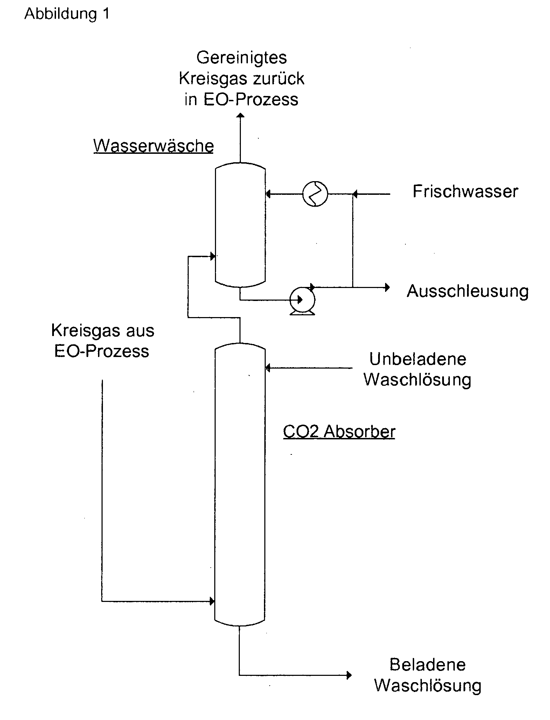

In einer anderen Ausführungsform, insbesondere vorteilhaft beim Bau von Neuanlagen, wird die Waschkolonne in den Kolonnenmantel einer anderen Kolonne, wie z. B. der CO₂-Absorber-Kolonne, integriert. Da bei Integration in die CO₂-Absorber-Kolonne die Gasvolumenströme identisch sind, kann auch der Kolonnen-Durchmesser gleich oder annähernd gleich bleiben.
Siehe auch Abbildung 1.

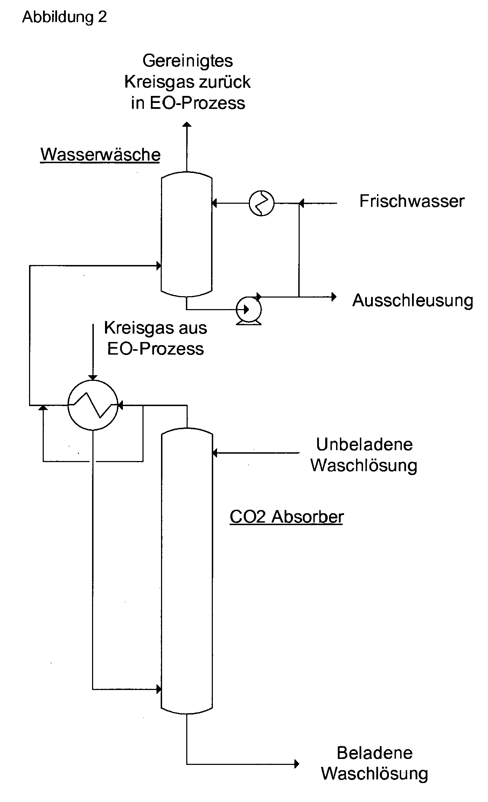

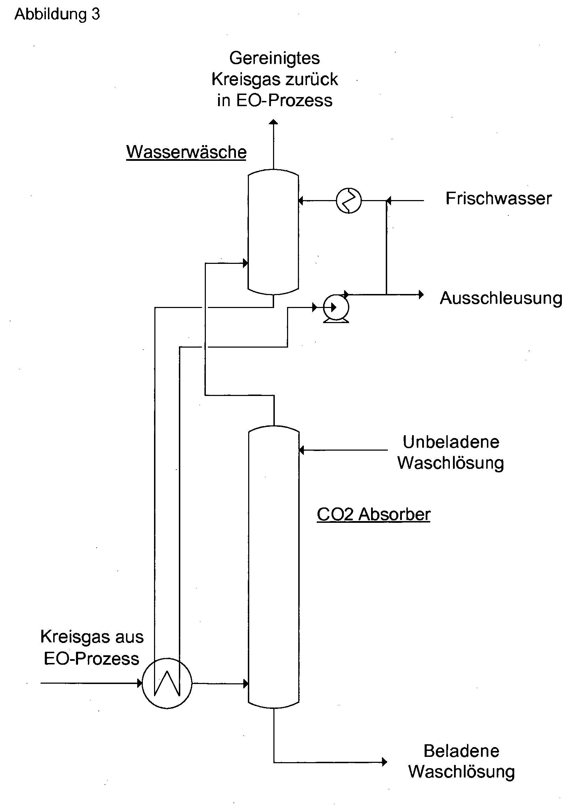

In einer weiteren Ausführungsform wird über einen Wärmetauscher der Gasstrom vor dem Eintritt in die CO₂-Absorber-Kolonne aufgeheizt und der austretende Gasstrom abgekühlt. Da das Kreisgas aus dem EO-Prozess typischerweise hinter dem Kreisgaskompressor entnommen wird, besitzt es eine Temperatur größer 40 °C, typischerweise sogar größer 50 °C, sodass der Gasstrom hinter der CO₂-Absorber-Kolonne durch den Wärmetauscher nicht unter diesen Wert gekühlt werden kann. Die weitere Abkühlung und das Entfernen von Aminen kann dann in der Wasserwäsche erfolgen.
Siehe auch Abbildung 2.
Um den in die CO₂-Absorber-Kolonne eintretenden Gasstrom aufzuheizen, kann in einer weiteren Ausführungsform der Erfindung mittels eines Wärmetauschers das aufgeheizte Waschwasser verwendet werden.
Siehe auch Abbildung 3.

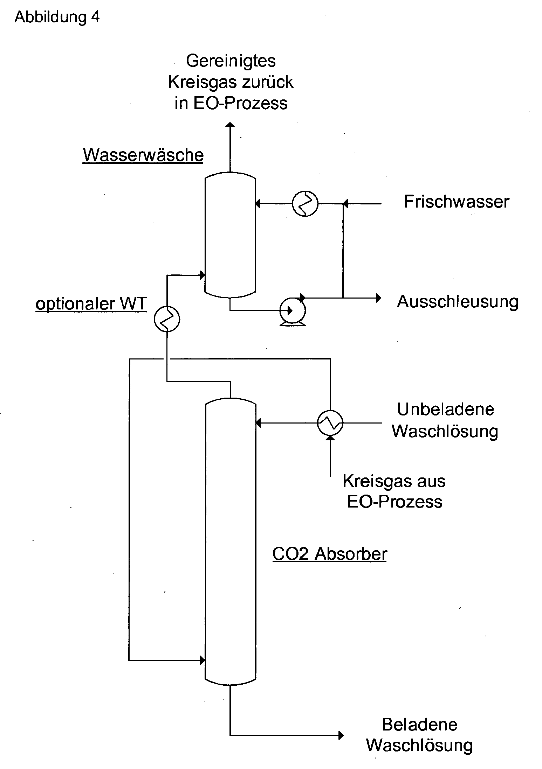

Um den in die CO₂-Absorber-Kolonne eintretenden Gasstrom aufzuheizen, kann in einer weiteren vorteilhaften Ausführungsform der Erfindung, die warme, von einem Stripper (zur CO₂-Entfernung) kommende, unbeladene Waschlösung verwendet werden. Im austretenden Gasstrom kann dann zusätzlich noch ein Wärmetauscher (WT), der mit Kühlwasser betrieben wird, geschaltet sein. Vorzugsweise wird auf diesen aber verzichtet und das Gas direkt in die Wasserwäsche geführt.
Siehe auch Abbildung 4.

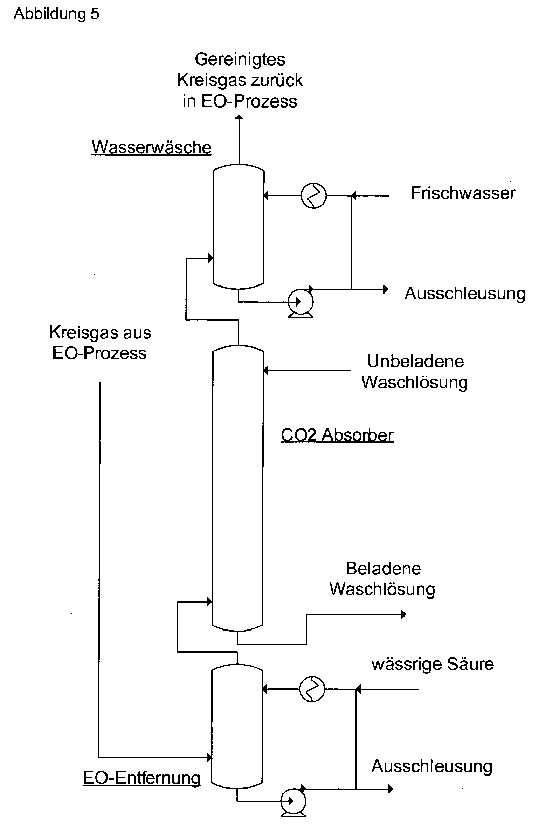

In einer weiteren Ausführungsform wird vor die CO₂-Absorber-Kolonne eine saure Wäsche geschaltet, die in Spuren enthaltenes Ethylenoxid aus dem Kreisgas herauswäscht. Als Waschmittel kann dabei eine wässrige Lösung einer Säure, besonders Mineralsäure, wie z. B. Schwefel- oder Phosphoräure, verwendet werden. Das Ethylenoxid wird durch die Säure katalysiert zu Glykol umgesetzt, so dass diese saure Waschlösung im Kreis mit einem nur geringen Ausschleusungsstrom gefahren werden kann. Die Wäsche erfolgt dabei in einem Apparat in dem Gas und Flüssigkeit in intensiven Kontakt gebracht werden. Durch den damit reduzierten Gehalt an Ethylenoxid wird eine starke Degradation der Aminlösung (durch Reaktion des Amins mit dem EO) in der CO₂-Absorber-Kolonne verhindert.
Siehe auch Abbildung 5.

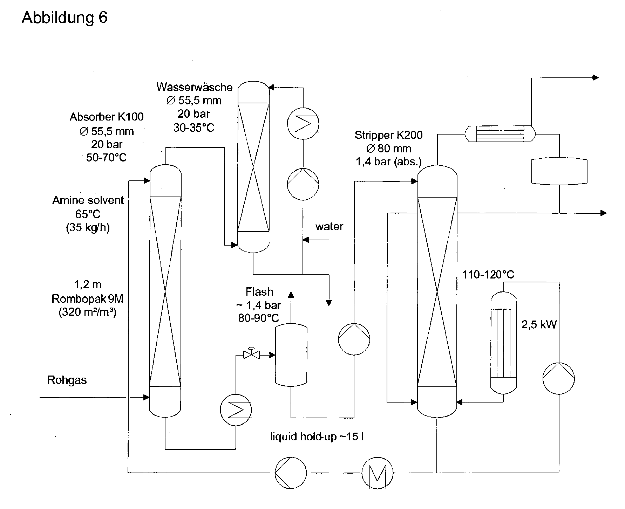

Gemäß den unten folgenden Versuchsbeispielen wurden in einer Pilotanlage (vgl. auch Abbildung 6) Langzeüversuche mit Amin-haltigen Lösungsmitteln (als Absorptionsmit-tel) gefahren. Dabei wurde Gas aus einem Ethylenoxidherstellungsprozess (Reaktion von O₂ mit Ethylen in der Gasphase an einem Katalysator, Nebenprodukt CO₂) nach der Entfernung des Hauptproduktes (Ethylenoxid) entnommen.

Als Anfangslösungsmittel wurden im ersten und zweiten Langzeitversuch im Waschkreislauf ein Lösungsmittel gemäß WO 03/082844 A1, nämlich eine wässrige Lösung von 35 Gew.-% N-Methyl-diethanolamin (MDEA) und 5 Gew.-% Piperazin (PIP), eingesetzt (s.u. Versuche 1-7). Da in dem Lösungsmittel hauptsächlich Piperazin (PIP) degradierte, wurde dieses auch bevorzugt nachgefahren. Außerdem wurde der Wassergehalt, wie bei der Anfangslösung, bei ca. 60 Gew.-% gehalten. Das nach mehr als 11 Wochen Betriebszeit entstandene Lösungsmittel wies von der Ursprungslösung stark veränderte Konzentrationen auf.

In einem dritten Langzeitversuch wurde als Anfangslösungsmittel eine wässrige Lösung von 30 Gew.-% Triethylendiamin und 5 Gew.-% Piperazin eingesetzt (Versuch 8). Auch hier wurde der Wassergehalt auf dem Niveau der Ausgangslösung von ca. 65 % gehalten. Das nach mehr als 13 Wochen Betriebszeit entstandene Lösungsmittel wies ebenfalls von der Ursprungslösung stark veränderte Konzentrationen auf.

Hinter dem CO₂-Absorber wurde eine Wasserwäsche, ausgeführt als Packungskolonne, betrieben. Da der CO₂-Absorber mit einer 40 %igen Aminlösung für die Versuche 1-7 und mit einer 35 %igen Aminlösung für den Versuch 8, die mit 65 °C in die Kolonne eintritt, betrieben wurde, enthielt der Reingasstrom größere Mengen an Aminen, die durch die Wasserwäsche aufgefangen werden mussten.

Über eine Gasprobenahme mit Waschflaschen, in denen sich Essigsäure befand, konnte der Gesamtamingehalt im Gas, das die Wäsche verlässt, bestimmt werden. Dabei wurden sämtliche alkalischen Komponenten aufgefangen und konnten anschließend über eine Stickstoffanalytik alle Komponenten, die Stickstoff enthalten, gefunden werden. Dadurch war es möglich, auch unbekannte, sich gebildete Komponenten zu finden, die sich eventuell auch negativ auf den Katalysator auswirken können. Als Ergebnis konnte der Amingehalt in der Gasphase unter Zugrundelegung einer mittleren Molmasse (es wurde die von Piperazin verwendet) für die Amine auf 4 Vol.-ppm (Versuch 1) und durch Erhöhen der Frischwasserzufuhr und Absenken der Temperatur auf 1,6 Vol.-ppm (Versuch 2) und 1,4 Vol.-ppm (Versuch 3) gesenkt werden.

Der Erfolg der Wasserwäsche war überraschend, da auf Grund der Degradation eine Vielzahl an Komponenten entsteht, deren Abtrennbarkeit in einer Wasserwäsche unter Umständen unbekannt ist. Aufgrund der geringen ausgeschleusten Wassermenge können sich außerdem Komponenten im Waschwasser aufpegeln und somit den Amindampfdruck über der Lösung erhöhen. Des Weiteren kann z. B. laut US 3,137,654 Ammoniak entstehen, der aufgrund seiner großen Flüchtigkeit schlecht in einer Wasserwäsche abgetrennt werden kann.

Da das Packungsbett der Pilotanlage nur eine Höhe von 1,2 m aufwies, war zu vermuten, dass die Gleichgewichtskonzentration in der Gasphase noch nicht erreicht war und daher in einem großtechnischen Apparat mit noch geringeren Aminkonzentrationen zu rechnen ist. Um dies nachzuweisen wurde der Gasvolumenstrom abgesenkt, um die Verweilzeit in der Kolonne zu erhöhen und damit ein größeres Packungsbett zu simulieren. Eine Absenkung von 50 kg/h auf 25 kg/h ergab dabei eine Absenkung der Aminkonzentration von 0,33 Vol.-ppm auf 0,18 Vol.-ppm für die Versuche 4 und 5. Und von 5,6 Vol.-ppm auf 3,6 Vol.-ppm für die Versuche 6 und 7, die jedoch bei höheren Temperaturen, als erfindungsgemäß beschrieben, gefahren wurden, um die Stoffübergangslimitierung zu zeigen. Damit ist zu erwarten, dass in einer Großanlage die oben beschriebenen 1 Vol.-ppm zum Schutz des Katalysators sicher unterschritten werden. Somit kann bei einem Einsatz der Waschvorrichtung entsprechend dieser Erfindung eine Schädigung des Katalysators verhindert werden. Aufgrund der großen Kapazitäten von World-Scale-EO-Anlagen, bewirken Änderungen von wenigen Prozentpunkten in der Selektivität eine große Änderung in den Kosten.

Alle Druckangaben beziehen sich auf den Absolutdruck.

### Beispiele

### Beschreibung und Prozessparameter:

Für die Versuche wurde eine Miniplantanlage verwendet, die aus einem Absorber (K100) mit 55,5 mm Durchmesser und 1,2 m Betthöhe, einem Stripper (K200) mit 80 mm Durchmesser und 1,2 m Betthöhe, einer Wasserwäsche (K300) mit 55,5 mm Durchmesser und 1,2 m Betthöhe und einem Flashbehälter (B100) besteht (Abbildung 6). Als Packungen wurde eine Rombopak 9M verwendet. Die Anlage ist vollautomatisiert, um wichtige Prozessgrößen konstant zu halten und wurde für Langzeitversuche verwendet, um die Anwendbarkeit der Wasserwäsche auch für sich ändernde Lösungsmittelzusammensetzungen zu prüfen.

Die relevanten Prozessparameter sind:
Rohgaszufuhr: 50 kg/h
Rohgastemperatur: 55 °C
Rohgaskonzentrationen Mittelwerte in Vol.%:

| CO₂ | C₂H₄ | C₂H₆ | EO | H₂O | Ar | O₂ | N₂ | CH₄ |
|---|---|---|---|---|---|---|---|---|
| 1 | 30 | 0,2 | 5-50 Vol.-ppm | 0,2 | 3 | 5 | 1,5 | 58,8 |

Lösungsmittelholdup der gesamten Anlage im Aminkreislauf: 15 l
Umlaufende Lösung: 35 kg/h
Temperatur Lösung zum Absorber: 65 °C
Temperatur Lösung zum Flash: 90 °C
Druck Absorber: 18 bar
Druck Flashbehälter: 1,45 bar
Druck Stripper: 1,4 bar
Verdampferleistung: 2,5 kW

### Entstandene Aminlösungen

Es wurden drei Langzeitversuche (LV) gefahren, dabei wurden regelmäßig Proben am Sumpf des Strippers gezogen und mit Hilfe eines GCs analysiert. Für die bekannten und kalibrierten Komponenten können daher Konzentrationen angegeben werden. Der Verlauf der Aminkonzentrationen und des Wassergehaltes war wie folgt:

**Langzeitversuch 1: Ausgangslösung 35 % MDEA, 5 % Piperazin**

| Laufzeit h | Wasser | MDEA | PIP | EG | MMEA | mPIP | DEA | hem PIP | HEP | TEG | TEA | BHEP | BICINE |
|---|---|---|---|---|---|---|---|---|---|---|---|---|---|
| | g/100g | g/100g | g/100g | g/100g | g/100g | g/100g | g/100g | 0 | g/100g | g/100g | g/100g | g/100g | g/100g |
| 0 | 60,1 | 35,0 | 4,8 | 0,00 | 0,00 | 0,00 | 0,00 | 0,00 | 0,00 | 0,00 | 0,00 | 0,00 | 0,00 |
| 17 | 58,5 | 36,2 | 5,3 | 0,00 | 0,00 | 0,00 | 0,00 | 0,00 | 0,00 | 0,00 | 0,00 | 0,00 | 0,00 |
| 67 | 58,5 | 37,4 | 5,3 | 0,00 | 0,00 | 0,00 | 0,00 | 0,00 | 0,00 | 0,00 | 0,00 | 0,00 | 0,00 |
| 185 | 59,4 | 34,7 | 4,7 | 0,00 | 0,16 | 0,10 | 0,00 | 0,00 | 0,00 | 0,00 | 0,00 | 0,00 | 0,00 |
| 355 | 60,9 | 34,6 | 4,4 | 0,00 | 0,00 | 0,09 | 0,16 | 0,00 | 0,00 | 0,00 | 0,09 | 0,00 | 0,00 |
| 595 | 61,8 | 35,5 | 2,2 | 0,00 | 0,32 | 0,11 | 0,32 | 0,02 | 0,41 | 0,00 | 0,22 | 0,05 | 0,12 |
| 760 | 81,3 | 12,5 | 1,3 | 0,00 | 0,15 | 0,05 | 0,21 | 0,00 | 0,19 | 0,10 | 0,10 | 0,01 | 0,04 |
| 946 | 61,1 | 29,3 | 3,4 | 0,33 | 0,46 | 0,14 | 0,67 | 0,03 | 1,51 | 0,20 | 0,72 | 0,48 | 0,52 |
| 1074 | 61,0 | 30,1 | 2,1 | 0,41 | 0,43 | 0,13 | 0,74 | 0,17 | 1,53 | 0,19 | 1,31 | 0,76 | 0,69 |
| 1180 | 58,5 | 28,8 | 0,9 | 0,43 | 0,45 | 0,15 | 0,80 | 0,25 | 1,83 | 0,19 | 1,47 | 1,02 | 0,88 |
| 1231 | 59,5 | 29,0 | 2,0 | 0,41 | 0,41 | 0,21 | 0,75 | 0,25 | 1,71 | 0,16 | 1,84 | 1,03 | 0,74 |
| 1372 | 60,4 | 28,1 | 0,8 | 0,42 | 0,38 | 0,18 | 0,67 | 0,40 | 1,82 | 0,14 | 2,21 | 1,41 | 0,95 |
| 1511 | 60,4 | 26,2 | 0,4 | 0,52 | 0,32 | 0,13 | 0,93 | 0,61 | 1,81 | 0,15 | 2,93 | 2,16 | 0,97 |
| 1629 | 60,5 | 25,0 | 0,1 | 0,55 | 0,21 | 0,10 | 1,11 | 0,81 | 1,80 | 0,15 | 3,58 | 2,42 | 1,20 |
| 1634 | 59,8 | 24,7 | 0,5 | 0,56 | 0,36 | 0,10 | 0,76 | 0,58 | 1,53 | 0,14 | 3,23 | 2,21 | 1,56 |
| 1798 | 60,9 | 23,9 | 1,7 | 0,50 | 0,44 | 0,25 | 1,14 | 0,82 | 1,78 | 0,14 | 3,77 | 2,32 | 1,49 |
| 1826 | 57,7 | 20,2 | 4,6 | 0,51 | 0,42 | 0,28 | 0,80 | 0,67 | 1,71 | 0,13 | 3,78 | 2,22 | 1,94 |
| 1991 | 57,1 | 18,9 | 3,0 | 0,37 | 0,47 | 0,40 | 1,16 | 0,88 | 2,71 | 0,13 | 4,93 | 2,34 | 1,97 |
| 2133 | 59,2 | 16,3 | 1,9 | 0,51 | 0,53 | 0,37 | 1,49 | 1,11 | 3,08 | 0,13 | 5,56 | 3,28 | 2,11 |
| 2279 | 57,8 | 14,8 | 0,9 | 0,81 | 0,47 | 0,20 | 1,23 | 1,18 | 2,54 | 0,12 | 5,74 | 4,00 | 2,62 |
| 2327 | 54,7 | 14,0 | 3,5 | 0,41 | 0,52 | 0,30 | 1,28 | 1,18 | 2,67 | 0,12 | 5,97 | 3,96 | 2,74 |
| 2495 | 55,4 | 13,2 | 2,8 | 0,35 | 0,48 | 0,27 | 1,69 | 1,30 | 2,90 | 0,12 | 6,82 | 4,15 | 3,30 |
| 2639 | 57,8 | 11,4 | 1,7 | 0,43 | 0,75 | 0,28 | 3,50 | 2,32 | 4,95 | 0,22 | 12,66 | 7,67 | 6,61 |

**Langzeitversuch 2: Ausgangslösung 35 % MDEA, 5 % Piperazin**

| Laufzeit h | Wasser | MDEA | PIP | EG | mPIP | DEA | hem PIP | HEP | TEG | TEA | BHEP | BICINE |
|---|---|---|---|---|---|---|---|---|---|---|---|---|
| | g/100g | g/100g | g/100g | g/100g | g/100g | g/100g | g/100g | g/100g | g/100g | g/100g | g/100g | g/100g |
| 4 | 66,1 | 29,4 | 4,3 | 0,00 | 0,00 | 0,00 | 0,00 | 0,05 | 0,00 | 0,00 | 0,00 | 0,00 |
| 100 | 59,1 | 34,8 | 4,9 | 0,21 | 0,06 | 0,00 | 0,01 | 1,11 | 0,00 | 0,00 | 0,01 | 0,00 |
| 172 | 58,7 | 32,5 | 4,3 | 0,33 | 0,10 | 0,05 | 0,03 | 1,71 | 0,00 | 0,00 | 0,02 | 0,15 |
| 193 | 57,2 | 31,4 | 5,5 | 0,34 | 0,11 | 0,09 | 0,00 | 1,89 | 0,00 | 0,00 | 0,22 | 0,29 |
| 193 | 0,0 | 0,0 | 0,0 | 0,00 | 0,00 | 0,00 | 0,00 | 0,00 | 0,00 | 0,00 | 0,00 | 0,00 |
| 292 | 55,4 | 31,4 | 6,6 | 0,46 | 0,20 | 0,14 | 0,03 | 2,80 | 0,00 | 0,00 | 0,47 | 0,31 |
| 460 | 56,7 | 26,3 | 6,7 | 0,54 | 0,31 | 0,29 | 0,18 | 4,19 | 0,00 | 0,00 | 1,23 | 0,21 |
| 772 | 61,1 | 19,4 | 6,8 | 0,60 | 0,37 | 0,45 | 0,00 | 4,76 | 0,00 | 2,15 | 1,79 | 0,35 |
| 924 | 59,5 | 17,4 | 6,0 | 0,68 | 0,36 | 0,57 | 0,57 | 5,09 | 0,00 | 2,53 | 2,20 | 0,27 |
| 1020 | 60,2 | 16,5 | 5,6 | 0,74 | 0,34 | 0,62 | 0,67 | 5,34 | 0,00 | 2,85 | 2,56 | 0,56 |
| 1164 | 60,6 | 15,1 | 5,4 | 0,75 | 0,31 | 0,66 | 0,75 | 5,31 | 0,00 | 3,13 | 2,77 | 1,12 |
| 1404 | 60,0 | 14,0 | 4,8 | 0,77 | 0,37 | 1,11 | 0,93 | 5,58 | 0,04 | 2,85 | 3,41 | 0,39 |
| 1572 | 59,7 | 12,5 | 4,8 | 0,82 | 0,32 | 1,29 | 0,96 | 5,20 | 0,00 | 2,74 | 3,50 | 0,35 |
| 1668 | 60,4 | 11,9 | 5,2 | 0,90 | 0,30 | 1,48 | 0,98 | 5,23 | 0,00 | 2,69 | 3,42 | 0,55 |
| 1836 | 60,7 | 10,7 | 4,2 | 0,87 | 0,23 | 1,70 | 0,97 | 5,01 | 0,00 | 2,75 | 3,68 | 0,84 |
| 1973 | 62,4 | 9,7 | 4,2 | 1,10 | 0,21 | 1,67 | 1,07 | 5,18 | 0,03 | 3,89 | 4,33 | 2,32 |
| 2117 | 61,3 | 8,2 | 3,9 | 1,00 | 0,17 | 1,79 | 1,15 | 4,51 | 0,01 | 3,25 | 4,31 | 2,25 |
| 2287 | 59,8 | 7,6 | 3,8 | 1,00 | 0,21 | 1,99 | 1,00 | 4,41 | 0,08 | 3,26 | 4,60 | 2,27 |
| 2455 | 60,2 | 6,1 | 4,2 | 1,10 | 0,27 | 1,98 | 1,03 | 4,20 | 0,09 | 3,30 | 4,70 | 2,70 |
| 2623 | 58,4 | 5,6 | 4,2 | 1,15 | 0,32 | 2,27 | 1,09 | 3,98 | 0,11 | 2,88 | 5,04 | 3,00 |
| 2719 | 58,3 | 4,1 | 3,4 | 1,08 | 0,25 | 1,97 | 0,98 | 3,35 | 0,04 | 2,10 | 4,07 | 2,70 |
| 2959 | 58,5 | 3,5 | 4,0 | 1,09 | 0,25 | 1,90 | 0,84 | 3,16 | 0,08 | 1,64 | 3,82 | 2,76 |

**Langzeitversuch 3: Ausgangslösung 30 % Triethylendiamin, 5 % Piperazin**

| Laufzeit h | Wasser | TEDA | PIP | Molmasse 242 *) | Molmasse 286 *) | TEG | hemPIP | HEP | BHEP |
|---|---|---|---|---|---|---|---|---|---|
| | g/100g | g/100g | g/100g | g/100g | g/100g | g/100g | g/100g | g/100g | g/100g |
| 90 | 67,0 | 27,4 | 5,0 | 0,00 | 0,00 | 0,00 | 0,00 | 0,00 | 0,00 |
| 115 | 66,7 | 27,6 | 5,1 | 0,00 | 0,00 | 0,00 | 0,00 | 0,00 | 0,00 |
| 259 | 63,0 | 26,6 | 6,9 | 0,64 | 0,20 | 0,00 | 0,00 | 0,75 | 0,21 |
| 374 | 62,3 | 22,6 | 7,3 | 0,97 | 0,25 | 0,06 | 0,34 | 0,70 | 0,77 |
| 501 | 63,3 | 18,5 | 5,7 | 1,26 | 0,36 | 0,04 | 0,31 | 0,62 | 0,59 |
| 669 | 63,2 | 13,7 | 4,7 | 1,89 | 1,04 | 0,00 | 0,00 | 0,87 | 0,34 |
| 846 | 62,5 | 12,3 | 5,5 | 2,42 | 1,27 | 0,00 | 0,00 | 1,29 | 0,47 |
| 1011 | 62,0 | 9,6 | 5,3 | 2,90 | 1,20 | 0,00 | 0,00 | 1,10 | 0,43 |
| 1173 | 66,7 | 8,0 | 5,2 | 2,92 | 1,10 | 0,00 | 0,00 | 1,22 | 0,45 |
| 1225 | 68,1 | 15,1 | 4,6 | 1,60 | 0,51 | 0,00 | 0,00 | 0,57 | 0,14 |
| 1391 | 66,2 | 15,0 | 4,8 | 2,21 | 0,81 | 0,00 | 0,00 | 0,33 | 0,27 |
| 1573 | 67,5 | 12,6 | 4,2 | 2,28 | 0,64 | 0,00 | 0,00 | 0,10 | 0,25 |
| 1600 | 64,0 | 7,4 | 3,0 | 1,44 | 0,56 | 0,00 | 0,00 | 0,36 | 0,37 |
| 1675 | 63,9 | 8,0 | 3,1 | 1,60 | 0,78 | 0,00 | 0,00 | 0,17 | 0,07 |
| 1711 | 67,7 | 14,2 | 5,5 | 1,92 | 0,86 | 0,00 | 0,00 | 0,24 | 0,28 |
| 1772 | 70,4 | 12,9 | 5,1 | 1,60 | 0,50 | 0,00 | 0,00 | 0,53 | 0,23 |
| 1851 | 66,9 | 10,0 | 4,0 | 1,04 | 0,26 | 0,00 | 0,00 | 2,17 | 0,86 |
| 2001 | 67,5 | 9,3 | 3,1 | 1,40 | 0,31 | 0,05 | 0,00 | 2,32 | 0,93 |
| 2140 | 66,2 | 8,6 | 2,9 | 1,90 | 0,65 | 0,07 | 0,00 | 3,33 | 1,73 |
| 2312 | 68,0 | 7,0 | 1,6 | 1,51 | 0,98 | 0,00 | 0,00 | 3,42 | 2,48 |
| 2448 | 66,9 | 6,8 | 1,3 | 1,57 | 0,90 | 0,00 | 0,00 | 3,06 | 2,08 |

| | | | | | | | | | |
|---|---|---|---|---|---|---|---|---|---|
| *) Komponente nicht kalibiert in GC, Molmasse aus GC-MS EG = Monoethylenglykol; TEG = Triethylenglykol MMEA = N-Methyl-monoethanolamin; DEA = Diethanolamin; TEA = Triethanolamin mPIP = N-Methyl-piperazin; hem PIP = N-(2-Hydroxyethyl)-N'-methyl-piperazin HEP = N-(2-Hydroxyethyl)-piperazin; BHEP = N,N'-Bis-(2-hydroxyethyl)-piperazin; BICINE = N,N'-Bis(2-hydroxyethyl)glycin | | | | | | | | | |

### Zusätzliche Wasserwäsche:

Die Wasserwäsche wurde mit einem umlaufenden Flüssigkeitsstrom von 40 kg/h betrieben. Die Flüssigkeitseintrittstemperatur lag in der Regel zwischen 30 und 40 °C und wurde in den Versuchen 6 und 7 kurzzeitig angehoben, um die Stoffübergangslimitierung zu zeigen.

| Versuch | Kampagne, Zeitpunkt | Rohgas in kg/h | Wasserzulauf In g/h | Temp, [°C] | Konz. [Vol.-ppm] |
|---|---|---|---|---|---|
| 1 | LV. 1, 2133 h | 50 | 500 | 36,7-38,8 | ~ 4,0 |
| 2 | LV. 1, 2495 h | 50 | 1000 | 32,0-33,9 | ~ 1,6 |
| 3 | LV. 1, 2639 h | 50 | 1400 | 32,6-34,7^{.} | ~ 1,4 |
| 4 | LV. 2, 2117 h | 50 | 500 | 33,0 | ~ 0,33 |
| 5 | LV. 2, 2287 h | 25 | 250 | 31,2 | ~ 0,18 |
| 6 | LV. 2, 2719 h | 50 | 500 | 68,3 | ~ 5,6 |
| 7 | LV. 2, 2623 h | 25 | 250 | 68,6 | ~ 3,6 |
| 8 | LV. 3, 2140 h | 50 | -*) | 30,0 | <0,1 |

| | | | | | |
|---|---|---|---|---|---|
| *) kein Wasserzulauf, Ausschleusung des Amins kann durch das kondensierte Wasser erfolgen | | | | | |

## Patentansprüche

1. Verfahren zur Entfernung von Kohlendioxid (CO₂) mittels eines Absorptionsmittels aus einem Kreisgassystem, wobei das CO₂ innerhalb eines Prozesses auftritt, in dem in der Gasphase an einem Katalysator eine Oxidation von Ethylen mit Sauerstoff (O₂) zu Ethylenoxid (EO) durchgeführt wird, bei der als Nebenprodukt CO₂ erzeugt wird, **dadurch gekennzeichnet, dass** als Absorptionsmittel eine wässrige Lösung eines oder mehrerer Amine verwendet wird, wobei man zur weiteren Reinigung des nach dem CO₂-Absorptionsschritt erhaltenen Kreisgasstroms diesen in innigen Kontakt mit Wasser bringt, welchem keine Mineralsäure und kein höheres Glykol zugefügt wurde, und das zur weiteren Reinigung des nach dem CO₂-Absorptionsschritt erhaltenen Kreisgasstroms verwendete Wasser wieder für denselben Reinigungsschritt zurückgeführt wird, wobei ein Teil des Wasser ausgeschleust und durch frisches Wasser ersetzt wird.

2. Verfahren nach dem vorhergehenden Anspruch, **dadurch gekennzeichnet, dass** das innige In-Kontakt-bringen mit Wasser in einer Waschkolonne durchgeführt wird.

3. Verfahren nach einem der beiden vorhergehenden Ansprüche, **dadurch gekennzeichnet, dass** man zur weiteren Reinigung des nach dem CO₂-Absorptionsschritt erhaltenen Kreisgasstroms diesen in innigen Kontakt mit Wasser bringt, welches eine Reinheit von ≥ 98 Gew.-% aufweist.

4. Verfahren nach einem der vorhergehenden Ansprüche, **dadurch gekennzeichnet, dass** die Temperatur des zur weiteren Reinigung des nach dem CO₂-Absorptionsschritt erhaltenen Kreisgasstroms verwendeten Wassers im Bereich von 20 bis 50 °C liegt.

5. Verfahren nach einem der vorhergehenden Ansprüche, **dadurch gekennzeichnet, dass** das ausgeschleuste Wasser einer Abwasserbehandlung zugeführt wird oder zur Herstellung von CO₂-Absorptionsmittel im vorhergehenden Verfahrensschritt zur CO₂-Entfernung eingesetzt wird.

6. Verfahren nach einem der vorhergehenden Ansprüche, **dadurch gekennzeichnet, dass** der Teil des ausgeschleusten Wassers so bemessen wird, dass die Konzentration an Aminen im zurückgeführten Wasser im Bereich von 10 bis 10000 Gew.-ppm liegt.

7. Verfahren nach einem der vorhergehenden Ansprüche, **dadurch gekennzeichnet, dass** als Absorptionsmittel eine wässrige Lösung enthaltend 10 bis 50 Gew.-% N-Methyl-diethanolamin und 1 bis 20 Gew.-% Piperazin verwendet wird.

8. Verfahren nach einem der vorhergehenden Ansprüche 1 bis 6, **dadurch gekennzeichnet, dass** als Absorptionsmittel eine wässrige Lösung enthaltend 5 bis 40 Gew.-% Triethylendiamin und 1 bis 15 Gew.-% Piperazin verwendet wird.

9. Verfahren nach einem der vorhergehenden Ansprüche, **dadurch gekennzeichnet, dass** der CO₂-Absorptionsschritt in einer CO₂-Absorber-Kolonne durchgeführt wird.

10. Verfahren nach dem vorhergehenden Anspruch, rückbezogen auf einen der Ansprüche 3 bis 8 und/oder rückbezogen auf Anspruch 2, **dadurch gekennzeichnet, dass** die Waschkolonne in den Kolonnenmantel der CO₂-Absorber-Kolonne integriert ist.

11. Verfahren nach Anspruch 9, rückbezogen auf einen der Ansprüche 3 bis 8 und/oder rückbezogen auf Anspruch 2, **dadurch gekennzeichnet, dass** über einen Wärmetauscher der Kreisgasstrom vor dem Eintritt in die CO₂-Absorber-Kolonne aufgeheizt und der austretende Gasstrom abgekühlt wird.

12. Verfahren nach Anspruch 9, rückbezogen auf einen der Ansprüche 3 bis 8 und/oder rückbezogen auf Anspruch 2, **dadurch gekennzeichnet, dass** mittels eines Wärmetauschers das aufgeheizte Waschwasser verwendet wird, um den in die CO₂₋Absorber-Kolonne eintretenden Gasstrom aufzuheizen.

13. Verfahren nach Anspruch 9, rückbezogen auf einen der Ansprüche 3 bis 8 und/oder rückbezogen auf Anspruch 2, **dadurch gekennzeichnet, dass** die warme, von einem Stripper zur CO₂-Entfernung kommende, unbeladene Waschlösung verwendet wird, um den in die CO₂-Absorber-Kolonne eintretenden Gasstrom aufzuheizen.

14. Verfahren nach einem der vorhergehenden Ansprüche 9 bis 13, **dadurch gekennzeichnet, dass** vor die CO₂-Absorber-Kolonne eine saure Wäsche geschaltet wird, die in Spuren enthaltenes Ethylenoxid aus dem Kreisgas herauswäscht.

## Claims

1. A process for removing carbon dioxide (CO₂) by means of an absorption medium from a cycle gas system, wherein the CO₂ occurs within a process in which, in the gas phase, ethylene is oxidized by oxygen (O₂) to ethylene oxide (EO) in the presence of a catalyst, in which, as by product, CO₂ is generated, which comprises using as absorption medium an aqueous solution of one or more amines, wherein, for further purification of the cycle gas stream obtained downstream of the CO₂ absorption step, this cycle gas stream is brought into intimate contact with water to which no mineral acid and no higher glycol was added, and the water used for further purification of the cycle gas stream obtained downstream of the CO₂ absorption step is recirculated back to the same purification step, wherein some of the water is ejected and replaced by fresh water.

2. The process according to the preceding claim, wherein the intimate contacting with water is carried out in a scrubbing column.

3. The process according to any one of the two preceding claims, wherein, for further purification of the cycle gas stream obtained downstream of the CO₂ absorption step, this cycle gas stream is brought into intimate contact with water having a purity of ≥ 98 % by weight.

4. The process according to any one of the preceding claims, wherein the temperature of the water used for further purification of the cycle gas stream obtained downstream of the CO₂ absorption step is in the range from 20 to 50 °C.

5. The process according to any one of the preceding claims, wherein the ejected water is fed to a wastewater treatment or is used for producing CO₂ absorption medium in the preceding process step for CO₂ removal.

6. The process according to any one of the preceding claims, wherein the part of the ejected water is of a size such that the concentration of amines in the recirculated water is in the range from 10 to 10 000 ppm by weight.

7. The process according to any one of the preceding claims, wherein the absorption medium used is an aqueous solution comprising 10 to 50 % by weight of N-methyldiethanolamine and 1 to 20% by weight of piperazine.

8. The process according to any one of the preceding claims 1 to 6, wherein the absorption medium used is an aqueous solution comprising 5 to 40% by weight of triethylenediamine and 1 to 15% by weight of piperazine.

9. The process according to any one of the preceding claims, wherein the CO₂ absorption step is carried out in a CO₂-absorber column.

10. The process according to the preceding claim, referred back to any one of claims 3 to 8 and/or referred back to claim 2, wherein the scrubbing column is integrated into the column shell of the CO₂-absorber column.

11. The process according to claim 9, referred back to any one of claims 3 to 8 and/or referred back to claim 2, wherein the cycle gas stream, before entry into the CO₂-absorber column, is heated via a heat exchanger and the exiting gas stream is cooled.

12. The process according to claim 9, referred back to any one of claims 3 to 8 and/or referred back to claim 2, wherein the scrubbing water heated by means of a heat exchanger is used in order to heat the gas stream entering into the CO₂-absorber column.

13. The process according to claim 9, referred back to any one of claims 3 to 8 and/or referred back to claim 2, wherein the warm non-loaded scrubbing solution coming from a stripper for CO₂ removal is used in order to heat the gas stream entering into the CO₂-absorber column.

14. The process according to any one of the preceding claims 9 to 13, wherein an acid scrubber is connected upstream of the CO₂-absorber column, which acid scrubber scrubs ethylene oxide present in traces out of the cycle gas.

## Revendications

1. Procédé d'élimination de dioxyde de carbone (CO₂) d'un système de gaz en circulation au moyen d'un agent d'absorption, le CO₂ se formant dans le cadre d'un procédé selon lequel une oxydation d'éthylène avec de l'oxygène (O₂) en oxyde d'éthylène (EO) est réalisée en phase gazeuse sur un catalyseur, du CO₂ étant formé en tant que produit secondaire, **caractérisé en ce qu'**une solution aqueuse d'une ou de plusieurs amines est utilisée en tant qu'agent d'absorption, le courant de gaz en circulation obtenu après l'étape d'absorption du CO₂ étant, pour la purification supplémentaire de celui-ci, mis en contact intime avec de l'eau, à laquelle aucun acide minéral et aucun glycol supérieur n'a été ajouté, et l'eau utilisée pour la purification supplémentaire du courant de gaz en circulation obtenu après l'étape d'absorption du CO₂ étant recyclée pour la même étape de purification, une partie de l'eau étant évacuée et remplacée par de l'eau fraîche.

2. Procédé selon la revendication précédente, **caractérisé en ce que** la mise en contact intime avec de l'eau est réalisée dans une colonne de lavage.

3. Procédé selon l'une quelconque des deux revendications précédentes, **caractérisé en ce que**, pour la purification supplémentaire du courant de gaz en circulation obtenu après l'étape d'absorption du CO₂, celui-ci est mis en contact intime avec de l'eau qui présente une pureté ≥ 98 % en poids.

4. Procédé selon l'une quelconque des revendications précédentes, **caractérisé en ce que** la température de l'eau utilisée pour la purification supplémentaire du courant de gaz en circulation obtenu après l'étape d'absorption du CO₂ est dans la plage allant de 20 à 50°C.

5. Procédé selon l'une quelconque des revendications précédentes, **caractérisé en ce que** l'eau évacuée est introduite dans un traitement de l'eau résiduaire ou utilisée pour la fabrication d'un agent d'absorption du CO₂ dans l'étape de procédé précédente pour l'élimination du CO₂.

6. Procédé selon l'une quelconque des revendications précédentes, **caractérisé en ce que** la partie de l'eau évacuée est déterminée de manière à ce que la concentration en amines dans l'eau recyclée se situe dans la plage allant de 10 à 10 000 ppm en poids.

7. Procédé selon l'une quelconque des revendications précédentes, **caractérisé en ce qu'**une solution aqueuse contenant 10 à 50 % en poids de N-méthyl-diéthanolamine et 1 à 20 % en poids de pipérazine est utilisée en tant qu'agent d'absorption.

8. Procédé selon l'une quelconque des revendications 1 à 6, **caractérisé en ce qu'**une solution aqueuse contenant 5 à 40 % en poids de triéthylènediamine et 1 à 15 % en poids de pipérazine est utilisée en tant qu'agent d'absorption.

9. Procédé selon l'une quelconque des revendications précédentes, **caractérisé en ce que** l'étape d'absorption du CO₂ est réalisée dans une colonne d'absorption de CO₂.

10. Procédé selon la revendication précédente, se rapportant à l'une quelconque des revendications 3 à 8 et/ou se rapportant à la revendication 2, **caractérisé en ce que** la colonne de lavage est intégrée dans l'enveloppe de colonne de la colonne d'absorption de CO₂.

11. Procédé selon la revendication 9, se rapportant à l'une quelconque des revendications 3 à 8 et/ou se rapportant à la revendication 2, **caractérisé en ce que** le courant de gaz en circulation est chauffé par un échangeur de chaleur avant l'entrée dans la colonne d'absorption de CO₂ et le courant de gaz sortant est refroidi.

12. Procédé selon la revendication 9, se rapportant à l'une quelconque des revendications 3 à 8 et/ou se rapportant à la revendication 2, **caractérisé en ce que** l'eau de lavage chauffée est utilisée au moyen d'un échangeur de chaleur pour chauffer le courant de gaz entrant dans la colonne d'absorption de CO₂.

13. Procédé selon la revendication 9, se rapportant à l'une quelconque des revendications 3 à 8 et/ou se rapportant à la revendication 2, **caractérisé en ce que** la solution de lavage chaude déchargée, provenant d'un extracteur pour l'élimination du CO₂, est utilisée pour chauffer le courant de gaz entrant dans la colonne d'absorption de CO₂.

14. Procédé selon l'une quelconque des revendications 9 à 13 précédentes, **caractérisé en ce qu'**un lavage acide, qui élimine du gaz en circulation l'oxyde d'éthylène contenu sous la forme de traces, est connecté avant la colonne d'absorption du CO₂.
